# EUROPÄISCHE PATENTSCHRIFT

(11) **EP 4 210 930 B1**
(45) Veröffentlichungstag und Bekanntmachung des Hinweises auf die Patenterteilung: **22.10.2025**
(21) Anmeldenummer: 21777445.4
(22) Anmeldetag: 09.09.2021
(51) Int. Cl.: B29C 65/18, B29C 65/30, B29C 65/14, B65B 51/14, B65B 51/10

(54) **SIEGELORGAN**
SEALING ELEMENT
ÉLÉMENT DE SCELLAGE

(30) Priorität: 09.09.2020 DE 102020123565
(43) Veröffentlichungstag der Anmeldung: 19.07.2023
(73) Patentinhaber: watttron GmbH, 01705 Freital (DE)
(72) Erfinder: STEIN, Marcus, 01705 Freital (DE); BACH, Sascha, 01705 Freital (DE)
(74) Vertreter: Lippert Stachow Patentanwälte Rechtsanwälte Partnerschaft mbB
(86) Internationale Anmeldenummer: PCT/EP2021/074867
(87) Internationale Veröffentlichungsnummer: WO 2022/053586

(56) Entgegenhaltungen:
- WO-A2-2006/042692
- DE-A1- 102016 117 834

## Beschreibung

Die Erfindung betrifft Verbesserungen an Siegelorganen.

Unter dem Begriff "Siegeln" wird hierin das stoffschlüssige Verbinden, insbesondere von Kunststoffen, vorrangig für die Herstellung von Verpackungen aus thermoplastischen Materialien wie Kunststofffolien oder Folienverbunden, wie beispielsweise mit metallischen und nichtmetallischen Werkstoffen beschichtete Kunststofffolien, mit thermoplastischem Kunststoff beschichteten Metallfolien wie Aluminiumfolie und dergleichen, beispielsweise bei der Herstellung von Schlauchbeuteln, dem Verschließen von Behältern, beispielsweise durch das Aufsiegeln von Kunststofffolie mit oder ohne Aluminiumbeschichtung, kunststoffbeschichteter Aluminiumfolie oder anderen thermisch schweißbaren Materialien auf Behälter aus Kunststoff mit oder ohne Beschichtung oder aus Aluminium mit Kunststoffbeschichtung, oder die Versiegelung/Verschweißung von Folien oder Folienverbunden der oben genannten Art.

Beim Siegeln kommen üblicherweise beheizte Siegelwerkzeuge (auch als Siegelorgane bezeichnet) zum Einsatz. Diese bestehen in der Regel aus einer Heizpatrone (gewickelter Widerstandsleiter) und einem Grundkörper, in dem die Heizpatrone sowie ein für die Temperaturregelung erforderlicher Temperaturfühler integriert sind.

WO 2018/055034 A1 beschreibt ein Siegelorgan, bei dem wärmeerzeugende Elemente eines Heizelements von dessen Rückseite her kontaktiert sind. Weitere Aspekte betreffen ein Siegelorgan, bei dem der Ort der Wärmeerzeugung und der Ort der Wärmeabfuhr (d.h. die Wirkstelle) möglichst nah beieinander angeordnet sind, ein Heizelement, das einen integrierten Temperatursensor aufweist, ein Siegelorgan mit der Möglichkeit, das Heizelement und/oder das zu verschweißende Material bedarfsweise zu kühlen oder anzusaugen.

Bekannte Siegelorgane, z.B. sogenannte Siegelbacken, weisen üblicherweise eine ebene Kontaktfläche auf. Ausnahmen sind sogenannte Siegelräder, deren kreisförmige Außenkontur beheizt wird. Diese Außenkontur korrespondiert jedoch nicht mit der Form des zu siegelnden Materials, sondern dient dazu, das runde Siegelrad fortlaufend auf einem an sich ebenen Material abzurollen, um auf diese Weise kontinuierlich eine Siegelnaht zu erzeugen, beispielsweise bei der Herstellung von Schlauchbeuteln, während diese von einer Formschulter abgezogen werden.

Es gibt jedoch verschiedene Anwendungsfälle, bei denen eine dreidimensional geformte Struktur gesiegelt werden muss. Ein Beispiel hierfür sind die sogenannten "Spoutbeutel", d.h. Beutel der unterschiedlichsten Art, die mit einem aufschraubbaren Wiederverschluss versehen sind. Der "Spout" (engl. für Ausgießer, Schnaupe, Tülle) ist dabei ein Kunststoff-Spritzgussteil, das einen Ausguss mit Gewinde bereitstellt, welcher durch eine Schraubkappe geöffnet und verschlossen werden kann. Überwiegend werden die "Spouts" entweder in einer oberen Ecke (z.B. Körperpflegeprodukte, Reinigungsmittel) oder in der Mitte der oberen Begrenzung der Beutel (z. B. Getränke, Fruchtmus) eingesetzt, je nach Anwendung bzw. Produkt.

Die maximale Dicke des Spouts wird durch den äußeren Durchmesser des Ausgießers bestimmt. Um diesen zwischen zwei Folienlagen einsiegeln zu können, weist das Kunststoffspritzteil ausgehend von der größten Dicke in der Mitte des Ausgusses eine nach beiden Seiten abnehmende Dicke auf, so dass die beiden Folien jenseits des Spouts sprungfrei direkt miteinander gesiegelt werden können. Die zu siegelnde Kontur ist damit dreidimensional geformt, weil die zu siegelnden Oberflächen des Spouts gebogen, d.h. einfach gekrümmt sind.

Die WO 2006/042692 A2 offenbart einen Kunststoffbeutel aus Kunststofffolie mit einem oder mehreren Ports, sowie ein Siegelorgan zu dessen Herstellung. Mindestens einer dieser Ports umfasst ein Kunststoffelement, das zwischen zwei Lagen Kunststofffolie eingeschweißt ist und dabei einen Portschweißbereich β bildet. lm Portschweißbereich (50) ist das Kunststoffelement (40) im Portschweißbereich (50) ist das Kunststoffelement (40) flach zusammendrückbar. Der Querschnitt des unbelasteten, nicht zusammengedrückten, Kunststoffelements (40) verläuft in Richtung hin zu seitlichen Rändern des Portschweißbereichs (50) keilförmig. Das Kunststoffelement (40) umfasst im Portschweißbereich (50) mindestens eine erste Kante (80). Der Kunststoffbeutel (10) ermöglicht ein optimiertes Herstellungsverfahren und ist insbesondere im medizinischen Bereich einsetzbar.

In der DE 10 2016 117834 A1 wird unter anderem ein Siegelorgan offenbart, bei dem wärmeerzeugende Elemente eines Heizelements von dessen Rückseite her kontaktiert sind.

Den Kern der vorliegenden Erfindung bildet das segmentierte, mosaikartige Anordnen und elektrische Verbinden von Heizelementen zur Erwärmung von 3-dimensionalen Oberflächen, wobei die Erwärmung kontaktbehaftet oder kontaktlos (mittels Strahlungswärme/Konvektionswärme) erfolgen kann.

Die Erfindung stellt ein Siegelorgan bereit, das in der Lage ist, sowohl ebene als auch dreidimensionale Siegelnähte diskontinuierlich herzustellen, also beispielsweise ein Werkstück mit einfach gekrümmten (d.h. gebogenen) oder auch doppelt gekrümmten (d.h. gewölbten) Außenkonturen zu siegeln, beispielsweise eine Folie aufzuschweißen oder das Werkstück zwischen zwei Folien einzuschweißen.

In einer Ausgestaltung umfasst das vorgeschlagene Siegelorgan zum thermischen Verbinden thermoplastischer Materialien entlang einer gebogenen oder gewölbten Kontur eine Mehrzahl von Heizelementen, sowie mindestens ein Konturelement, das eine gebogene oder gewölbte Kontur aufweist, wobei die Heizelemente an dem Konturelement angeordnet sind und wobei erfindungsgemäß die Heizelemente je ein flächiges Trägersubstrat mit einer Vorderseite und einer Rückseite umfassen, auf dessen Vorderseite mindestens ein Heizkreis angeordnet ist.

Der Begriff "flächig" bedeutet in diesem Zusammenhang beispielsweise "in Form eines Plättchens", wobei das Plättchen eben oder gebogen oder gewölbt sein kann. Der besondere Vorteil der Erfindung kommt zum Tragen, wenn einfach herzustellende ebene, von den Abmessungen her relativ kleine Heizelemente miteinander so kombiniert werden, dass im Zusammenwirken einer Vielzahl derartiger Heizelemente eine komplexe, gebogene oder gewölbte Siegelkontur abgebildet wird.

Im einfachsten Fall enthält ein Trägersubstrat genau einen Heizkreis, der beispielsweise in einem Dünnschicht-Beschichtungsverfahren aus Metall oder in einem Dickschicht-Druckverfahren aus leitfähiger Paste oder leitfähig ausgerüstetem Keramikschlicker, hergestellt wird. Ebenso vom Erfindungsgedanken umfasst sind aber selbstverständlich auch Ausgestaltungen, bei denen auf einem Trägersubstrat zwei oder mehrere Heizkreise angeordnet sind. Vorteilhaft kann vorgesehen sein, dass die Heizelemente einzeln ansteuerbar sind. Besonders vorteilhaft kann vorgesehen sein, dass jeder einzelne Heizkreis hinsichtlich seiner Heizleistung bzw. der Zieltemperatur getrennt von allen anderen Heizkreisen, auch solchen, die sich auf demselben Trägersubstrat befinden, ansteuerbar ist.

Gemäß einer Ausgestaltung weist das Siegelorgan eine Steuer- oder Regeleinrichtung auf oder ist mit einer Steuer- oder Regeleinrichtung verbindbar, die die separate Einzelansteuerung bzw. Regelung aller Heizkreise ermöglicht. Eine solche Steuer- oder Regeleinrichtung kann entweder allein oder zusammen mit einer Leistungselektronik in einem Gehäuse des Siegelorgans angeordnet sein. Alternativ kann die Leistungselektronik auch Bestandteil einer Verpackungsmaschine sein, als deren Komponente das Siegelorgan verwendet wird, wenn das Siegelorgan mit der Leistungselektronik der Verpackungsmaschine verbunden ist.

Gemäß einer anderen Ausgestaltung sind die Heizkreise der Heizelemente von der Rückseite der Trägersubstrate her durch das jeweilige Trägersubstrat hindurch kontaktiert. Alternativ oder zusätzlich kann vorgesehen sein, dass die Steuer- oder Regeleinrichtung mit den Heizkreisen der Heizelemente durch eine flexible Leiterplatte verbunden ist, durch welche die Heizkreise der Heizelemente elektrisch kontaktiert werden. In Kombination dieser beiden Ausgestaltungen ergibt sich eine Ausführungsform, bei der eine flexible Leiterplatte Leiterbahnen aufweist, die von einer Steuer- oder Regeleinrichtung oder/und einer Leistungselektronik zu allen Heizelementen führt und deren Heizkreise von der Rückseite der jeweiligen Trägersubstrate her kontaktiert. Dazu können die Trägersubstrate beispielsweise VIAs (Vertical Interconnect Access), d.h. leitende Durchkontaktierungen, aufweisen. Außerdem kann die flexible Leiterplatte im Bereich der VIAs sogenannte Landing Pads (Kontaktinseln) aufweisen, die beispielsweise durch Löten, Bonden, Kleben mit leitfähigem Kleber, Ultraschallschweißen oder andere geeignete Kontaktierungsverfahren mit rückseitig auf den Trägersubstraten angeordneten Kontaktstellen verbunden werden können.

Die flexible Leiterplatte vereinfacht außerdem den universellen Einsatz einer so hergestellten Anordnung von Heizelementen, indem die durch die Leiterplatte flexibel miteinander verbundenen Heizelemente bedarfsweise auf einem anderen Konturelement, dessen Vorderseite eine andere zu siegelnde Kontur aufweist, angebracht werden. Gemäß einer weiteren Ausgestaltung sind die Heizelemente bzw., falls vorgesehen, das vorderseitige zweite Konturelement, durch ein Abdeckelement abgedeckt, dessen Vorderseite die zu siegelnde Kontur aufweist. Das Abdeckelement kann beispielsweise aus einem elektrisch nicht leitenden Material bestehen, um Kurzschlüsse zu vermeiden und gleichzeitig dem Siegelorgan eine Abriebschutzschicht zu geben. Sind die Heizelemente mit ihrer Vorderseite an der Rückseite eines zweiten Konturelements befestigt, so kann alternativ auch das zweite Konturelement gleichzeitig die Funktion des Abdeckelements übernehmen.

Das vorgeschlagene Siegelorgan kann beispielsweise mehrere kleine (z.B. zwischen 2mm x 2mm und 20mm x 20mm), flächige, rechteckige, quadratische oder andersartig geformte Heizelemente umfassen, die jeweils mindestens einen Heizkreis sowie vorteilhaft eine integrierte Möglichkeit zur Temperaturmessung aufweisen. Die Heizelemente können beispielsweise aus bedruckten keramischen, metallischen oder kunststoffbasierten Trägersubstraten bestehen.

Die Anordnung der Heizelemente kann beispielsweise mosaikartig entsprechend einer dreidimensionalen zu erwärmenden Struktur erfolgen. Dazu können verschieden große Elemente im Mosaik kombiniert werden, um eine möglichst exakte (stufenartige) Abbildung der dreidimensionalen Kontur zu erzielen.

Im Fall kontaktbehafteter Erwärmung können die Heizelemente zusätzlich an einen metallischen Wärmeübertrager (z.B. ein Siegelprofilblech) thermisch angekoppelt sein, die ein Negativ der zu erwärmenden dreidimensionalen Oberfläche darstellt.

Die elektrische Kontaktierung kann beispielsweise mittels eines flexiblen Folienkabels (z.B. aus Polyimid) - in einer Art "Perlenkette" erfolgen. Die elektrische Verbindung zwischen dem flexiblen Folienkabel und den Heizelementen kann beispielsweise mittels Löten, Sintern oder Schweißen erfolgen. Das eingesetzte flexible Folienkabel kann darüber hinaus einen starren Anteil enthalten (sog. starr-flex).

Heizelemente werden dazu in ebener Anordnung elektrisch kontaktiert und anschließend entlang der entsprechend geformten Siegelprofilblech-Rückseite (entsprechend der zu siegelnden Kontur) angeordnet und thermisch kontaktiert. Die elektrische Kontaktierung der Heizelemente erfolgt vorzugsweise auf der Rückseite der Heizelemente, wodurch eine bestmögliche Homogenität der Oberflächentemperatur auf der Wirkseite gewährleistet werden kann.

Zur Fixierung kann rückseitig ein erstes Konturelement als Trägerstruktur stoffschlüssig, beispielsweise durch Schweißen, Löten oder Sintern, oder kraftschlüssig, beispielsweise durch Andrücken oder Klemmen, angebracht werden, über das auch die Kraft übertragen wird und die Heizelemente dadurch eingekapselt werden. Die Heizelemente sind dadurch nicht im Kraftfluss.

Das zwischen Heizelement und zu erwärmender dreidimensionaler Oberfläche befindliche zweite Konturelement, beispielsweise ein Profilblech, kann beispielsweise eine maximale Dicke von 1,5 mm (maximaler Abstand zwischen Heizelementen und Profiloberfläche) aufweisen und kann zur exakten Abbildung der dreidimensionalen Oberfläche nachträglich spanabhebend (beispielsweise durch Fräsen, Drehen, Schleifen oder dergleichen) bearbeitet werden.

Das für das zweite Konturelement zum Einsatz kommende (beispielsweise metallische) Material weist einen hohen Wärmeleitkoeffizienten (>100W/m*K) auf.

Im Fall der kontaktlosen (Strahlungs-)Erwärmung kann das vorderseitige zweite Konturelement entfallen und die Heizelemente können beispielsweise rückseitig stoffschlüssig in hochtemperaturbeständige Isolationsmaterialien eingebracht sein.

Die elektrische Kontaktierung der Heizelemente kann beispielsweise mittels angeschweißten Drähten, angeschweißten, gelöteten oder gesinterten Kontaktstiften oder dergleichen erfolgen. Die elektrische Kontaktierung kann sowohl auf der Vorderseite (Wirkseite) als auch auf der Rückseite der Heizelemente erfolgen.

Die Gesamtbaugruppe kann weiterhin zwischen Heizelement und Gehäuse einen Isolierkörper aus thermisch isolierendem Material aufweisen. Das Gehäuse kann aus metallischem oder thermisch isolierendem Material bestehen.

Die durch eine Vielzahl (mind. 2) an Einzelheizelementen gekennzeichneten Siegelorgane verfügen über entsprechend mehrkanalige Steuer- oder Regeleinrichtung und Temperaturmessung. Diese sind vorzugsweise im Gehäuse der Baugruppe integriert. Wenn Bauraum und Einsatzbedingungen dies nicht erlauben, kann diese Steuer- oder Regeleinrichtung auch in entsprechendem Abstand zu den Heizelementen in einem separaten Gehäuse platziert werden.

Die Heizelemente können vorteilhaft sowohl die Funktion der resistiven Erwärmung als auch der resistiven Temperaturmessung besitzen. Dazu kann der auf dem Trägersubstrat eines Heizelements angeordnete (einzelne) Heizkreis direkt selbst zur Temperaturmessung genutzt werden, indem er einen ausreichenden temperaturabhängigen Heizwiderstand aufweist. Alternativ oder zusätzlich kann ein separater Messleiter auf dem Trägersubstrat des Heizelements angeordnet sein, der eine hohen (>1000 ppm/K) temperaturabhängigen Widerstand aufweist.

Nachfolgend werden Ausführungsbeispiele des vorgeschlagenen Siegelorgans anhand von Zeichnungsfiguren näher erläutert. Dabei zeigen
Fig. 1 ein erstes Ausführungsbeispiel des Siegelorgans ohne Kühleinrichtung,
Fig. 2 die Heizerbaugruppe aus Fig. 1,
Fig. 3 eine Explosionsdarstellung der Heizerbaugruppe aus Fig. 2,
Fig. 4 die Anordnung der Heizelemente in der Heizerbaugruppe der Fig. 2 und 3,
Fig. 5 ein zweites Ausführungsbeispiel des Siegelorgans mit Kühleinrichtung,
Fig. 6 die Anordnung der Heizelemente in der Heizerbaugruppe der Fig. 5.

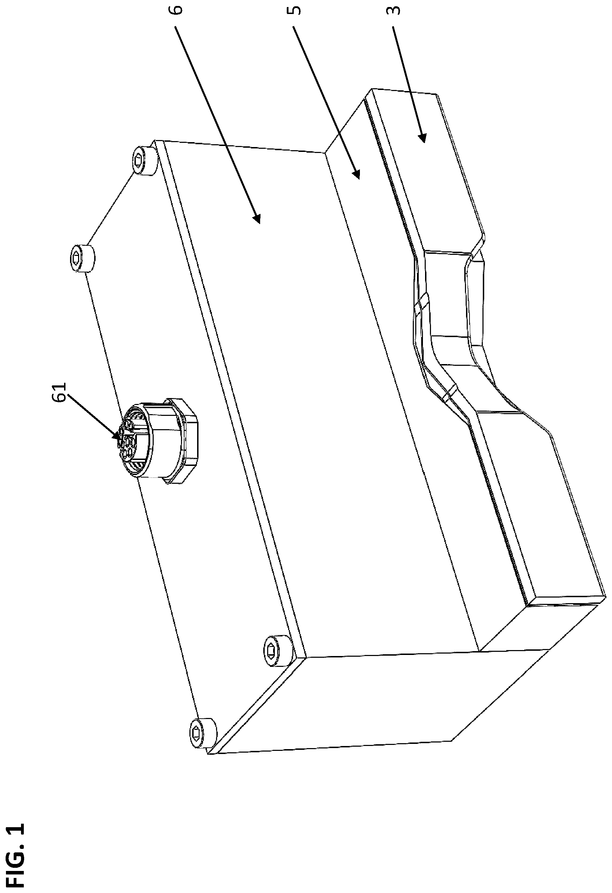

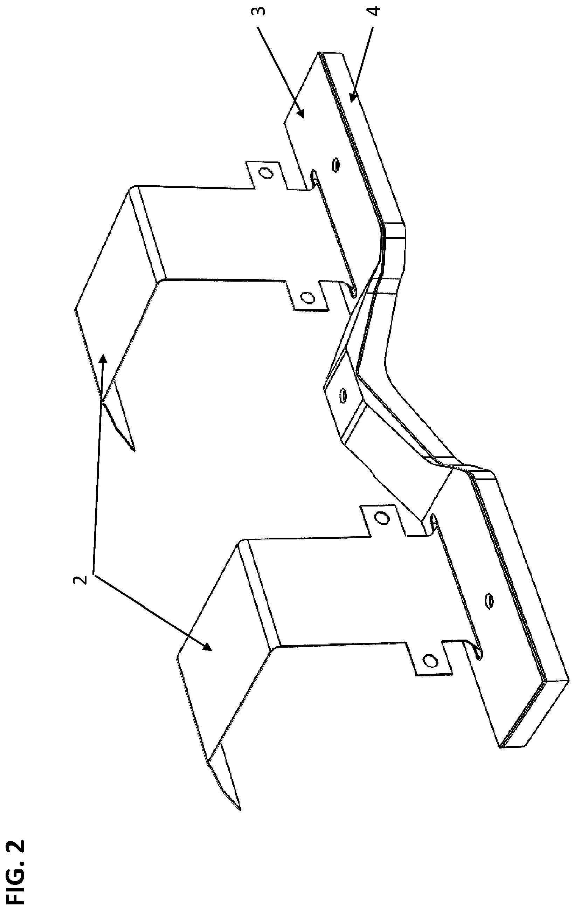

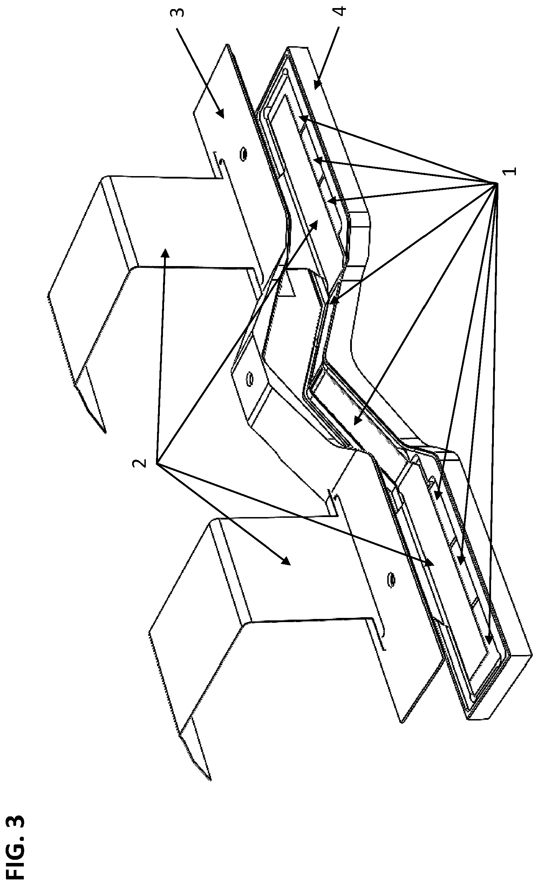

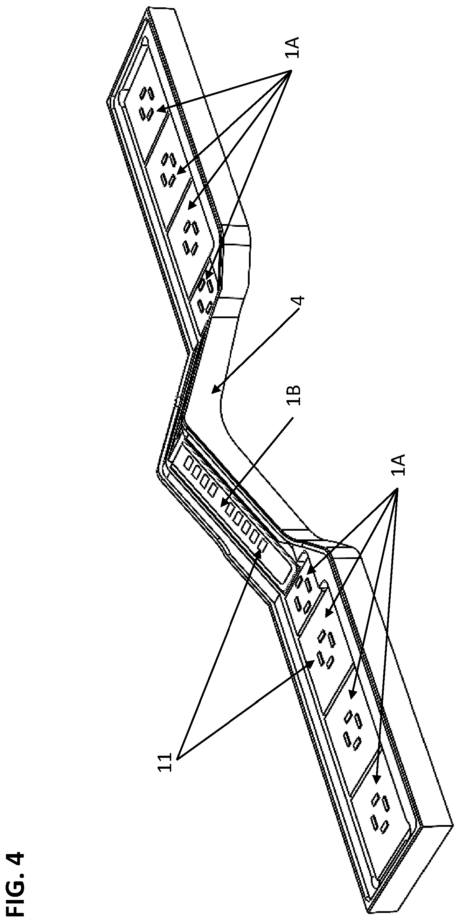

Fig. 1 bis 4 beziehen sich auf ein erstes Ausführungsbeispiel des vorgeschlagenen Siegelorgans, bei dem an einem Gehäuse 6 mit einem Steckverbinder 61 ein Isolierkörper 5, der gleichzeitig als Stützelement für ein Heizermodul wirkt, angebracht ist.

Das Heizermodul umfasst ein erstes Konturelement 3, das gleichzeitig als Trägerstruktur für die Heizelemente wirkt, sowie ein zweites Konturelement 4, das gleichzeitig als Abdeckstruktur für die Heizelemente dient. Das erste Konturelement 3 kann dabei aus dem gleichen Material wie das zweite Konturelement 4 ausgeführt und mit diesem stoffschlüssig verbunden (beispielsweise verschweißt oder verlötet) sein.

Zwischen erstem Konturelement 3 und zweitem Konturelement 4 ist eine Anordnung von Heizelementen eingeschlossen und gekapselt, die jeweils ein Trägersubstrat 1 aufweisen, wobei die Trägersubstrate 1 jeweils auf ihrer Vorderseite mindestens einen Heizkreis aufweisen.

In den beiden Endbereichen der Anordnung von Heizelementen handelt es sich um Trägersubstrate 1A, die jeweils genau einen Heizkreis aufweisen. Im mittleren Bereich, der eine gebogene Kontur trägt, handelt es sich um Trägersubstrate 1B, die jeweils mehrere Heizkreise aufweisen.

Auf ihren Rückseiten weisen die Trägersubstrate 1 Kontaktinseln 11 auf, durch welche die auf der Vorderseite des Trägersubstrats angeordneten Heizkreise elektrisch kontaktiert werden. Hierzu sind entsprechende Leiterstrukturen einer flexiblen Leiterplatte 2 mit den Kontaktinseln 11 verbunden. Die Heizkreise sind mittels Durchkontaktierungen von der Rückseite der Trägersubstrate 1 her durch diese hindurch elektrisch kontaktiert.

Die Trägersubstrate 1 der Heizelemente weisen hierzu Durchkontaktierungen, sogenannte VIAs, auf, die mit den Heizelementen auf der Vorderseite der Trägersubstrate 1 verbunden sind. Eine flexible Leiterplatte 2 mit Leiterbahnen zur Kontaktierung jedes einzelnen Heizelements erstreckt sich über die Rückseite der gesamten Anordnung von Trägersubstraten 1 und die darauf angeordneten Leiterbahnen sind mit den VIAs elektrisch verbunden. Die flexible Leiterplatte 2 verbindet alle Trägersubstrate 1 mechanisch miteinander, wobei die Flexibilität der Leiterplatte 2 dazu führt, dass die gesamte Anordnung von Trägersubstraten 1 flexibel ist und sich dadurch an eine dreidimensionale Kontur anpassen lässt.

Das rückseitige erste Konturelement 3 ist mittels eines Stützelements 5 mit einem Gehäuse 6 verbunden, in welchem beispielsweise eine Steuer- oder Regeleinrichtung angeordnet sein kann. Diese Steuer- oder Regeleinrichtung kann dabei beispielsweise ständig zwischen einem Heizbetrieb, in dem das Heizelement mit Heizenergie beaufschlagt wird, und einem Temperaturmessbetrieb, in dem der temperaturabhängig veränderliche Widerstand des Heizelements ermittelt wird, hin und her schalten. Dadurch wird es möglich, die jedem Heizkreis zugeführte Heizenergie so zu regeln, dass entweder alle Heizkreise dieselbe Temperatur erreichen (homogene Temperaturverteilung) oder verschiedene Heizkreise verschiedene Temperaturen erreichen (heterogene Temperaturverteilung).

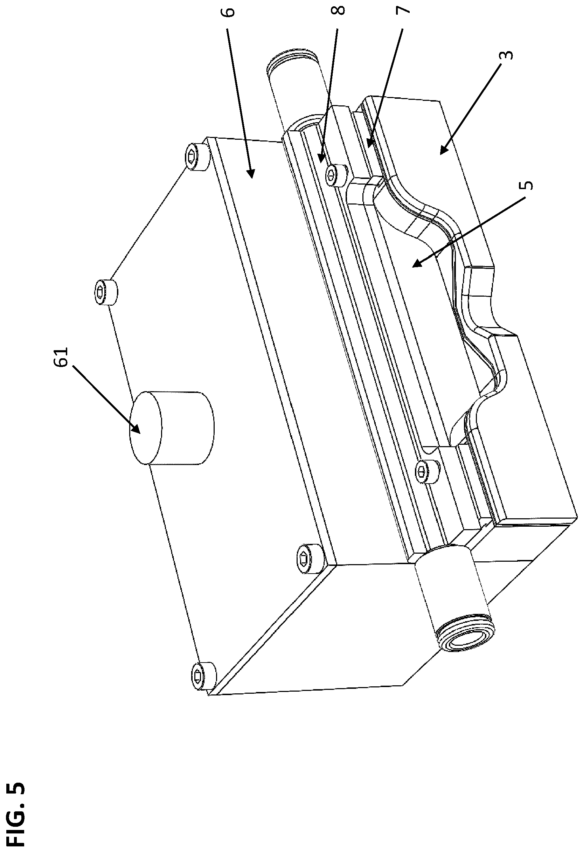

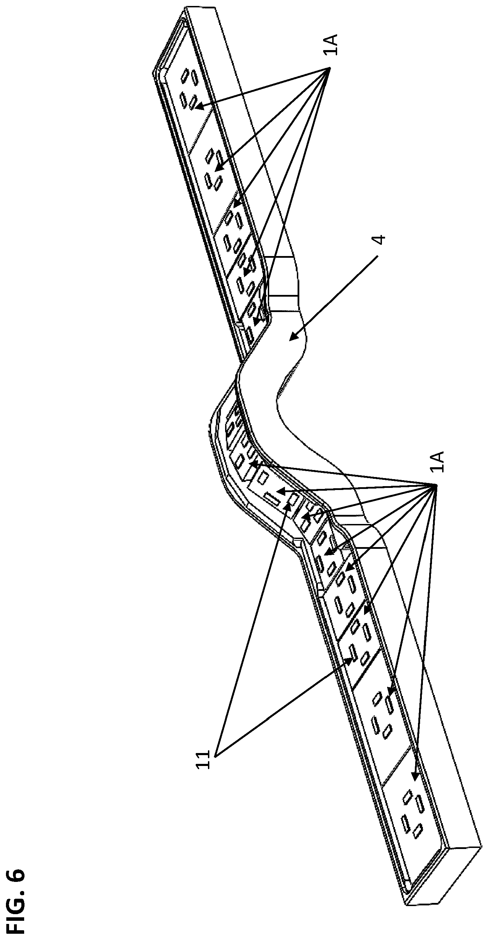

Fig. 5 und 6 beziehen sich auf ein zweites Ausführungsbeispiel des vorgeschlagenen Siegelorgans, das prinzipiell wie das erste Ausführungsbeispiel aufgebaut, so dass insoweit auf die obige Beschreibung verwiesen werden kann. Folgende Unterschiede bestehen jedoch:
Die verwendeten Heizelemente sind in diesem Ausführungsbeispiel sämtlich von dem Typ, bei dem auf einem Trägersubstrat 1A genau ein Heizkreis angeordnet ist. Im Gegensatz zum ersten Ausführungsbeispiel kommen hier keine Heizelemente vor, bei denen ein Trägersubstrat mehrere Heizkreise trägt. Die Kontaktierung der Heizelemente erfolgt wie im ersten Ausführungsbeispiel durch eine flexible Leiterplatte 2, die mit Kontaktinseln 11 auf der Rückseite der Trägersubstrate 1 verbunden ist.

Das Siegelorgan weist in diesem Ausführungsbeispiel darüber hinaus eine Kühleinrichtung auf, die einen Wärmeableitkörper 7 umfasst, der mit einer aktiv betriebenen fluidischen Kühleinheit verbunden ist. Beispielsweise kann vorgesehen sein, dass das rückseitige erste Konturelement 3 gleichzeitig als Wärmeableitkörper 7 ausgeführt ist. Hierzu kann das erste Konturelement 3 beispielsweise Kühlmittelkanäle aufweisen. Alternativ kann, wie für dieses Ausführungsbeispiel in Fig. 5 gezeigt, ein separater Wärmeableitkörper 7 (beispielsweise ein geformtes Blech oder entsprechend gefrästes Bauteil) rückseitig an dem ersten Konturelement 3 angeordnet sein. Der Wärmeableitkörper kann dabei so an dem ersten Konturelement 3 angebracht sein, dass der Wärmefluss zwischen dem i.d.R. mit höherer Temperatur betriebenen Spout-Bereich und den beiden flachen Endbereichen der Siegelung, in denen beiderseits des Spouts nur die Folien aufeinander gesiegelt werden, reduziert wird. Im Ausführungsbeispiel weist der Wärmeableitkörper 7 ein Winkelprofil auf, dessen einer Schenkel nur in den beiden Endbereichen des Heizermoduls ausgebildet ist, wo die beiden Laschen, die dieser Schenkel des Winkelprofils dadurch bildet, hinter das erste Konturelement greifen und dort dessen Wärme aufnehmen. Im Ausführungsbeispiel der Fig. 5 weist die Kühleinrichtung weiterhin einen Kühlkörper 8 auf, der mit dem zweiten, durchgehend ausgebildeten Schenkel des Wärmeableitkörpers 7 in wärmeleitender Verbindung steht und der über Kühlmittelanschlüsse verfügt, über die der Kühlkörper 8 von einer nicht gezeigten Kühleinheit her mit Kühlmittel versorgt wird, welches die vom Wärmeableitkörper 7 auf den Kühlkörper 8 übertragene Wärme abtransportiert. Dadurch wird eine schärfe Temperaturabgrenzung innerhalb des Konturelements und damit der Siegeloberfläche von bis über 50K ermöglicht.

### Bezugszeichenliste

- 1: Trägersubstrat
- 1A: Trägersubstrat mit einem Heizkreis
- 1B: Trägersubstrat mit mehreren Heizkreisen
- 11: Kontaktinsel
- 2: Flexible Leiterplatte
- 3: Erstes Konturelement, Trägerstruktur
- 4: Zweites Konturelement, Abdeckstruktur
- 5: Isolierkörper, Stützelement
- 6: Gehäuse
- 61: Steckverbinder
- 7: Wärmeableitkörper
- 8: Kühlkörper

## Patentansprüche

1. Siegelorgan zum thermischen Verbinden thermoplastischer Materialien entlang einer gebogenen oder gewölbten Kontur, umfassend eine Mehrzahl von Heizelementen, sowie mindestens ein Konturelement (3,4), das eine gebogene oder gewölbte Kontur aufweist, wobei die Heizelemente an dem Konturelement (3,4) angeordnet sind, **dadurch gekennzeichnet, dass** die Heizelemente je ein flächiges Trägersubstrat (1) mit einer Vorderseite und einer Rückseite aufweisen, auf dessen Vorderseite mindestens ein Heizkreis angeordnet ist.

2. Siegelorgan nach Anspruch 1, bei dem die Heizelemente in einem Dickschicht-Druckverfahren aus leitfähiger Paste oder leitfähig ausgerüstetem Keramikschlicker hergestellt sind.

3. Siegelorgan nach einem der Ansprüche 1 und 2, bei dem die Heizelemente in einem Dünnschicht-Beschichtungsverfahren aus Metall hergestellt sind.

4. Siegelorgan nach einem der Ansprüche 1 bis 3, das eine Steuer- oder Regeleinrichtung aufweist oder mit einer Steuer- oder Regeleinrichtung verbindbar ist, wobei jedes Heizelement hinsichtlich seiner Heizleistung oder der Zieltemperatur getrennt von allen anderen Heizelementen ansteuerbar ist.

5. Siegelorgan nach einem der Ansprüche 1 bis 4, bei dem die Heizelemente mittels einer flexiblen Leiterplatte (2) elektrisch kontaktiert sind.

6. Siegelorgan nach Anspruch 5, bei dem die elektrische Kontaktierung durch Sintern, Löten, Bonden, Kleben mit leitfähigem Kleber oder Ultraschallschweißen erfolgt.

7. Siegelorgan nach einem der Ansprüche 1 bis 6, bei dem die Heizkreise von der Rückseite der Trägersubstrate (1) her durch das jeweilige Trägersubstrat (1) hindurch elektrisch kontaktiert sind.

8. Siegelorgan nach einem der Ansprüche 1 bis 7, bei dem die Trägersubstrate (1) mit den darauf angebrachten Heizkreisen zwischen einem rückseitigen ersten Konturelement (3), das als Trägerstruktur wirkt, und einem vorderseitigen zweiten Konturelement (4), das als Abdeckstruktur wirkt, eingekapselt sind.

9. Siegelorgan nach einem der Ansprüche 1 bis 8, weiter umfassend eine Kühleinrichtung mit einem Wärmeableitkörper, der mit einer Kühleinheit verbunden ist.

10. Siegelorgan nach Anspruch 9, bei dem das erste Konturelement (3) gleichzeitig als Wärmeableitkörper ausgeführt ist.

11. Siegelorgan nach Anspruch 9, bei dem ein separater Wärmeableitkörper an dem ersten Konturelement (3) angeordnet ist.

## Claims

1. A sealing element for thermally connecting thermoplastic materials along an arcuate or arched contour, comprising a plurality of heating elements and at least one contour element (3, 4) which has an arcuate or arched contour, the heating elements being arranged on the contour element (3, 4), **characterized in that** the heating elements each comprise a flat carrier substrate (1) with a front side and a rear side, on the front side of which at least one heating circuit is arranged.

2. The sealing element as claimed in claim 1, in which the heating elements are produced in a thick film printing method from conductive paste or conductively prepared ceramic slurry.

3. The sealing element as claimed in either of claims 1 and 2, in which the heating elements are produced in a thin film coating method from metal.

4. The sealing element as claimed in one of claims 1 to 3, which comprises an open-loop or closed-loop control device or can be connected to an open-loop or closed-loop control device, wherein each heating element can be actuated with regard to its heating performance or the target temperature separately from all the other heating elements.

5. The sealing element as claimed in one of claims 1 to 4, in which the heating elements are contacted electrically by means of a flexible printed circuit board (2).

6. The sealing element as claimed in claim 5, in which the electric contacting takes place by way of sintering, soldering, bonding, adhesive bonding using a conductive adhesive, or ultrasonic welding.

7. The sealing element as claimed in one of claims 1 to 6, in which the heating circuits are contacted electrically from the rear side of the carrier substrates (1) through the respective carrier substrate (1).

8. The sealing element as claimed in one of claims 1 to 7, in which the carrier substrates (1) with the heating circuits attached on them are encapsulated between a rear-side first contour element (3), which acts as a carrier structure, and a front-side second contour element (4), which acts as a cover structure.

9. The sealing element as claimed in one of claims 1 to 8, further comprising a cooling device with a heat dissipation body which is connected to a cooling unit.

10. The sealing element as claimed in claim 9, in which the first contour element (3) is at the same time configured as a heat dissipation body.

11. The sealing element as claimed in claim 9, in which a separate heat dissipation body is arranged on the first contour element (3).

## Revendications

1. Élément de scellage destiné à relier thermiquement des matériaux thermoplastiques le long d'un contour arqué ou en arc, comprenant une pluralité d'éléments chauffants et au moins un élément de contour (3, 4) qui présente un contour arqué ou en arc, les éléments chauffants étant disposés sur l'élément de contour (3, 4), **caractérisé en ce que** les éléments chauffants comprennent chacun un substrat de support plat (1) avec une face avant et une face arrière, sur la face avant duquel est disposé au moins un circuit chauffant.

2. Élément de scellage selon la revendication 1, dans lequel les éléments chauffants sont fabriqués selon un procédé d'impression à couche épaisse à partir d'une pâte conductrice ou d'une suspension céramique préparée de manière conductrice.

3. Élément de scellage selon l'une des revendications 1 et 2, dans lequel les éléments chauffants sont produits selon un procédé de revêtement en couche mince à partir de métal.

4. Élément de scellage selon l'une des revendications 1 à 3, qui comprend un dispositif de commande ou de régulation ou peut être connecté à un dispositif de commande ou de régulation, dans lequel chaque élément chauffant peut être actionné en ce qui concerne sa puissance de chauffage ou la température de consigne séparément de tous les autres éléments chauffants.

5. Élément de scellage selon l'une des revendications 1 à 4, dans lequel les éléments chauffants sont en contact électrique au moyen d'une carte de circuit imprimé flexible (2).

6. Élément de scellage selon la revendication 5, dans lequel la connexion électrique est réalisée par frittage, soudure, collage, collage adhésif à l'aide d'un adhésif conducteur ou soudage par ultrasons.

7. Élément de scellage selon l'une des revendications 1 à 6, dans lequel les circuits chauffants sont mis en contact électrique depuis la face arrière des substrats de support (1) à travers le substrat de support (1) correspondant.

8. Élément de scellage selon l'une des revendications 1 à 7, dans lequel les substrats de support (1) avec les circuits de chauffage fixés sur ceux-ci sont encapsulés entre un premier élément de contour arrière (3), qui sert de structure de support, et un deuxième élément de contour avant (4), qui sert de structure de recouvrement.

9. Élément de scellage selon l'une des revendications 1 à 8, comprenant en outre un dispositif de refroidissement avec un corps de dissipation thermique qui est relié à une unité de refroidissement.

10. Élément de scellage selon la revendication 9, dans lequel le premier élément de contour (3) est en même temps configuré comme un corps de dissipation thermique.

11. Élément de scellage selon la revendication 9, dans lequel un corps de dissipation thermique séparé est disposé sur le premier élément de contour (3).
